# EUROPÄISCHE PATENTSCHRIFT

(11) **EP 0 594 091 B1**
(45) Veröffentlichungstag und Bekanntmachung des Hinweises auf die Patenterteilung: **18.06.1997**
(21) Anmeldenummer: 93116760.5
(22) Anmeldetag: 16.10.1993
(51) Int. Cl.: B26F 3/00, B24C 3/06, B24C 1/04

(54) **Flüssigkeits- und Abrasivmittelzuführung für eine Fluidstrahlschneidanlage**
Fluid- and abrasive material feed for a jet-cutting apparatus
Alimentation en liquide - et matériau abrasif pour un dispositif de découpage à jet de fluide

(30) Priorität: 17.10.1992 DE 4235091; 23.04.1993 DE 4313347; 27.05.1993 DE 9308023 U
(43) Veröffentlichungstag der Anmeldung: 27.04.1994
(73) Patentinhaber: SÄCHSISCHE WERKZEUG UND SONDERMASCHINEN GmbH, 01902 Neukirch (DE)
(72) Erfinder: Nedo, Werner, D-02625 Bautzen (DE); Thonig, Harry, Dr. Ing., D-01904 Neukirch (DE); Walden, Mathias, Dipl.-Ing., D-02689 Sohland (DE); Preusche, Dieter, D-01904 Neukirch (DE); Herrmann, Rolf, D-02689 Sohland (DE)
(74) Vertreter: Mühlisch, Alfred, Dipl.-Ing.

(56) Entgegenhaltungen:
- FR-A- 2 411 069
- US-A- 3 978 748
- TECHNISCHE RUNDSCHAU Bd. 81 , 20. Oktober 1989 Seite 32 VON ERNST NYFFENEGGER 'SCHNELLES WASSER ALS FLEXIBLES WERKZEUG'

## Beschreibung

Die Erfindung betrifft eine getrennte Zuführung von Flüssigkeiten, Abrasivmitteln und anderen Versorgungsmitteln zu einem in drei Dimensionen bewegbaren Schneidkopf einer Fluidstrahlschneidanlage.

Das Schneiden von weichen, elastischen, wärmeempfindlichen, wie auch das von harten und spröden Materialien mit einem Fluidstrahl ist bekannt. Dem Fluidstrahl kann ein Abrasivmittel zugemischt sein. Das Abrasivmittel wird aus einem am Schneidkopf befindlichen und mit einem Schneidkopf bewegten Vorratsbehälter zur Zumischung entnommen. Der Vorratsbehälter enthält den für den Schneidvorgang erforderlichen Vorrat an Abrasivmittel. Nach jedem Schneidvorgang ist der Vorratsbehälter erneut zu füllen oder auszutauschen (Technische Rundschau, Bd. 81, Seite 32).

Durch das Mitführen des gesamten Vorrats an Abrasivmittel ist die Dauer des Schneidvorganges begrenzt und die Schneidgeschwindigkeit auf Grund der zu beschleunigenden Masse relativ niedrig. Das Fluid wird in einer Hochdruckpumpe neben der Schneidanlage unter hohen Druck gesetzt und über eine Hochdruckleitung dem von einem Portal oder einem Roboterarm geführten Schneidkopf zugeführt. Dazu verbindet ein peitschenartig gebogenes, frei im Raum befindliches Hochdruckrohr über Rohrdrehgelenke den beweglichen Schneidkopf mit dem stationären Druckverstärker. Es ist auch bekannt, das Hochdruckrohr über spiralig gewundene, an dem Druckverstärker und am Schneidkopf gelagerte Rohrstücke zu verbinden. DPS 3 631 116 beschreibt darauf aufbauend die Verwendung eines zwischen einem Ausleger und dem Chassis angebrachten spiralig gewundenen Rohrstücks. Vom Ende des Auslegers wird das Hochdruckrohr im weiten Bogen als freie Leitung zum Schneidkopf geführt. Freie Druckleitungen sind besonders bei mit Kränen bedienten Großanlagen erheblich gefährdet.

Aus dem US-Patent 3 978 748 ist eine Wasserstrahlschneidmaschine für das reine Wasserstrahlschneiden ohne Abrasivmittel bekannt, bei der die Hochdruckwasserleitung im Innern einer aus zwei gelenkig miteinander verbundenen Armen bestehenden Verbindung zwischen einer stationären Hochdruckpumpe und einem auf einem Portal bewegten Schneidkopf geführt ist. Über die Gelenke in der Verbindung ist die Hochdruckleitung durch zu Torsionsfedern gewundene Rohrstücke geführt. Die Elastizität in Ausrichtung der am Schneidkopf befindlichen Torsionsfeder wird zu einer Bewegung des Schneidkopfes in Z-Richtung benutzt, wobei diese Bewegung erheblich begrenzt ist. Das Portal läuft mit Rollen auf Schienen und wird mit Spindeln angetrieben, die von Schrittmotoren bewegt werden. Bei einer im Innern eines Verbindungsarms geführten Hochdruckleitung ist der Raum für die Torsionsfedern sehr begrenzt. Deshalb ist eine Maßarbeit für die Torsionsfedern und beim Verlegen der Hochdruckleitung erforderlich, da bei der Bewegung des Verbindungsarms die Torsionsfedern gegen die Armwandung gedrückt werden können, was zu einer Zerstörung der Hochdruckleitung durch verstärkte Reibung führen kann.

Der Erfindung liegt deshalb die Aufgabe zugrunde, über einen Koppelarm die Hochdruckleitung, eine Abrasivmittelleitung und andere Versorgungsleitungen von stationären Versorgungen aus zu einem an einem auf Zahnstangen laufenden Portal befindlichen Schneidkopf zu führen.

Zur Lösung der Aufgabe ist die Flüssigkeits- und Abrasivmittelzuführung für eine Fluidstrahlschneidanlage durch die Merkmale des Patentanspruchs gekennzeichnet.

Die Erfindung soll nachstehend an Hand eines Ausführungsbeispiels näher erläutert werden. Die Zeichnung zeigt in
- Fig. 1.:: einen Blick auf die schematisch dargestellte Schneidanlage

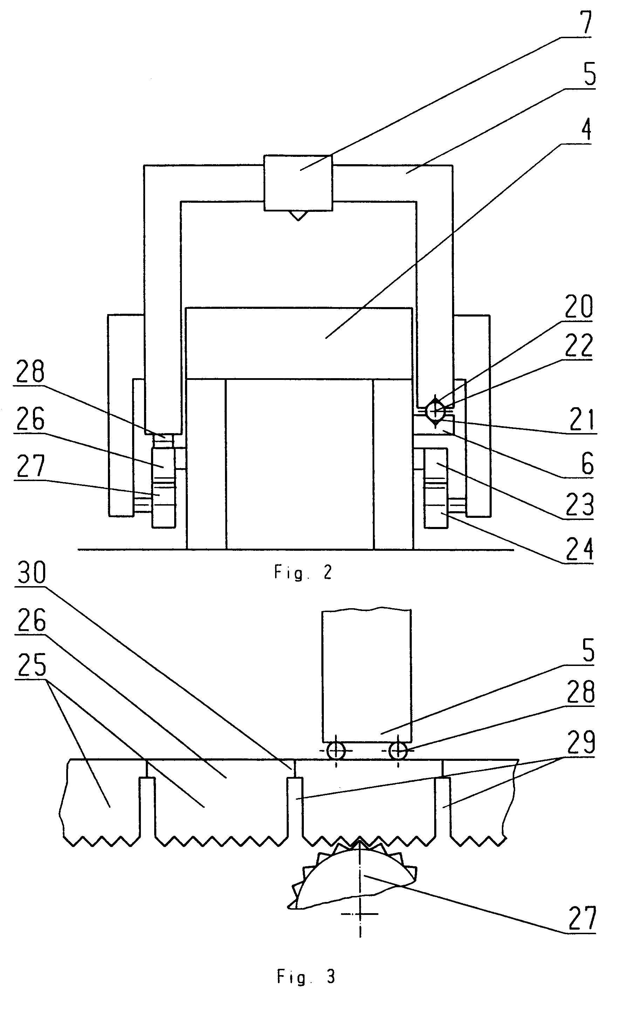

- Fig. 2.:: ein stilisiertes Maschinenportal
- Fig. 3.:: einen Ausschnitt der Auflage des Maschinenportals auf der Zahnstange

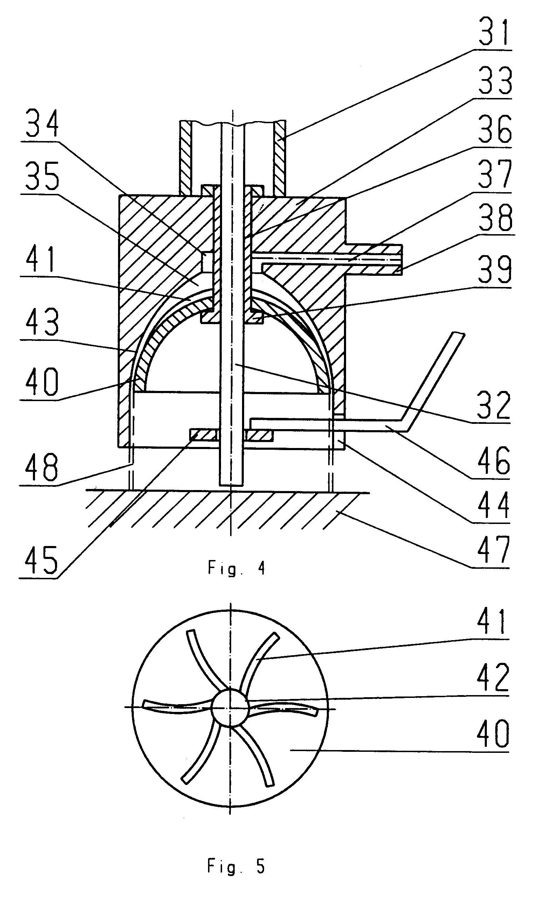

- Fig. 4.:: einen Schnitt durch eine Vorrichtung zur Erzeugung einer Schutzglocke
- Fig. 5.:: einen Verteilerkörper in Draufsicht.

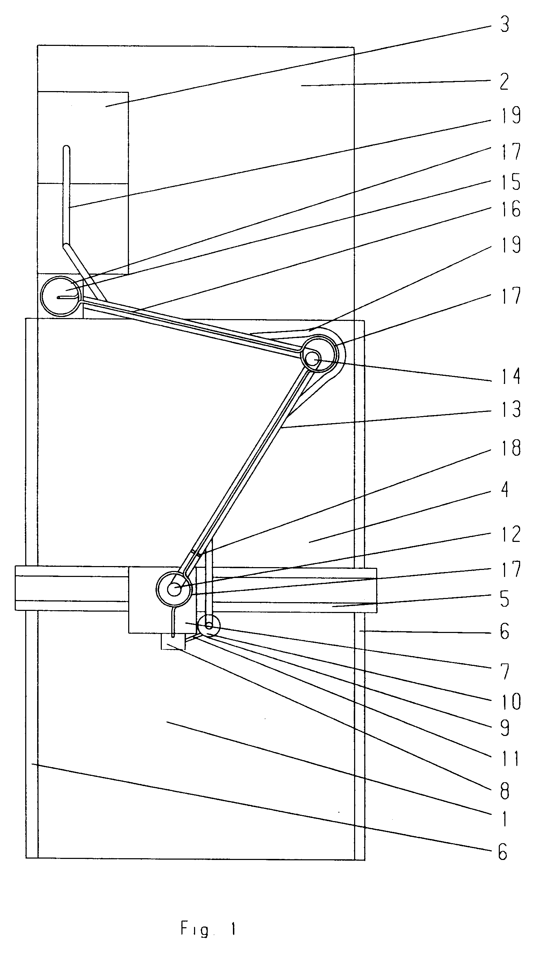

Die in Fig. 1 schematisch dargestellte Schneidanlage 1 besteht aus einem Versorgungsteil 2 und einem Arbeitstisch 4. Im Versorgungsteil 2 befindet sich Vorratsbehälter 3 für Abrasivmittel. Über dem Arbeitstisch 4 befindet sich ein Maschinenportal 5.Es läuft auf einer neben dem Arbeitstisch 4 angebrachten Schiene 6 und einer Zahnstange 26. Auf der Schiene 6 ist das Maschinenportal 5 mit einer bekannten Kugelführung 20 mit Kugelumlauf gelagert. Die Schiene 6 ist deshalb mit einer V-förmigen Nut 21 versehen, auf deren Seitenflanken die Kugeln 22 der Kugelführung 20 laufen. In eine aus bekannten Zahnstangensegmenten aufgebauten Zahnstange 23 greift ein das Maschinenportal 5 antreibendes Zahnrad 24 ein. Auf der anderen Seite des Arbeitstisches 4 befindet sich eine aus Zahnstangensegmenten 25 aufgebaute Zahnstange 26. In der mit ihren Zähnen vom Maschinenportal 5 abgewandten Zahnstange 26 läuft ein am Maschinenportal 5 angebrachtes Zahnrad 27. Das Zahnrad 27 treibt das Maschinenportal 5 auf dieser Seite an.

Auf der Rückseite der Zahnstange 26 laufen zwischen dem Maschinenportal 5 und der Zahnstange 26 angebrachte, tonnenförmige Walzen 28. Dazu sind die Rückseiten der Zahnstangensegmente 25 plangeschliffen und gehärtet. An der Stirnseite der Zahnstangensegmente 25 befinden sich die Rückseite der Zahnstangensegmente 25 verlängernde Nasen 30. Beim Montieren der Zahnstange 26 entstehen zwischen den Zahnstangensegmenten 25 Fugen 29, die nur an der Rückseite der Zahnstange 26 durch die Fugen 29 überbrückenden Nasen 30 geschlossen werden.

Das Maschinenportal 5 trägt einen Schlitten 7, an dem ein Schneidkopf 8 höhenverstellbar angebracht ist. Neben dem Schneidkopf 8 befindet sich ein Zwischenbehälter 9 mit einer Saugpumpe 10. Der Zwischenbehälter 9 ist über eine Schlauchleitung 11 mit dem Schneidkopf 8 verbunden. Der Schneidkopf 8 trägt eine Wasserstrahldüse 32, die von einem Schutzmantel 31 umgeben ist. Am Schutzmantel 31 ist ein Gehäuse 33 angebracht. Das Gehäuse 33 umgibt die Wasserstrahldüse 32 und enthält eine Vorrichtung zur Erzeugung einer Wasserwand 48 als Schutzglocke um den Schneidstrahl. Am Schlitten 7 ist über ein Gelenk 12 ein zweiteiliger Koppelarm 13 befestigt. Der Koppelarm 13 trägt zwischen seinen Teilarmen ein Gelenk 14 und ist über ein Gelenk 15 am Versorgungsteil 2 befestigt. Auf dem Koppelarm 13 befindet sich eine Druckrohrleitung 16. Über den Gelenken 12, 14 und 15 befinden sich spiralig gewundene Rohrstücke 17. Am Schlitten 7 befindet sich auf dem Koppelarm 13 eine Schlitzführung 18. In ihr wird die Druckrohrleitung 16 vom Koppelarm 13 abhebbar geführt. Der Zwischenbehälter 9 ist mit den Vorratsbehältern 3 über eine flexible Saugleitung 19 verbunden, die im Innern des Koppelarmes 13 geführt und um das Gelenk 14 herumgelegt ist. Neben der Saugleitung 19 läuft ein nicht dargestellter Schlauch als Versorgungsleitung für die Vorrichtung zur Erzeugung einer Schutzglocke aus Brauchwasser.

Der Schlauch ist an einem Schlauchansatz 38 am Gehäuse 33 angeschlossen. Im Gehäuse 33 befindet sich eine abgestufte Zentralbohrung 34, die sich zu einer glockenförmigen Ausnehmung 35 erweitert. In der Zentralbohrung 34 befindet sich ein die Wasserstrahlschneiddüse 32 ummantelndes Halterohr 36. Eine Seitenbohrung 37 verbindet den erweiterten Teil der Zentralbohrung 34 mit dem Schlauchansatz 38. Das Halterohr 36 endet in einem Bund 39, auf dem ein halbkugliger Verteilerkörper 40 drehbar befestigt ist. Auf der Außenfläche des Verteilerkörpers 40 sind von dessen Mittelloch 42 ausgehend, geschwungene Rippen 41 aufgebracht. Die glockenförmige Ausnehmung 35 ist so geformt, daß zwischen ihrer Wand und der Außenfläche des Verteilerkörpers 40 ein Freiraum als Ringspalt 43 bleibt. Der Ringspalt 43 hat trotz wachsendem Durchmesser eine konstante Querschnittfläche, die der Querschnittfläche der Seitenbohrung 37 entspricht. Damit wird eine gleichmäßige Verteilung des die Schutzglocke bildenden Wassers garantiert. Die Wandung des Gehäuses 33 überragt den Verteilerkörper 40. In ihr befindet sich ein Schlitz 44. In dem Schlitz 44 greift ein Arm 46 ein. An dem Arm 46 ist ein Sensor 45 befestigt, der die Wasserstrahlschneiddüse 32 umfaßt. Mit dem Sensor 45 wird Schneidgut 47 abgetastet. Das Schneidgut 47 liegt auf dem Arbeitstisch 4 unter der Wasserstrahlschneiddüse 32. Mit dem Sensor 45 wird der richtige Schneidabstand für die Wasserstrahlschneiddüse 32 ermittelt. Bei Beginn der Schneidarbeiten wird der Sensor 45 in die Ausnehmung 35 zurückgezogen. Gleichzeitig wird Wasser über die Seitenbohrung 37 zugeführt. Dieses wird verwirbelt und dreht den Verteilerkörper 40. Damit wird eine gleichmäßige Wasserverteilung in der Ausnehmung 35 erreicht. Es bildet sich eine ringförmige Wasserwand 48 um die Wasserstrahlschneiddüse 32. Die Wasserwand 48 schließt einen geschlossenen Schneidraum zum Lärm- und Spritzwasserschutz in sich ein.

Bei der Bewegung des Schlittens 7 und des Maschinenportals 5 wird der Koppelarm 13 über der Schneidablage 1 mit bewegt. Durch die spiralig gewundenen Rohrstücke 17 ist eine Bewegung in den Gelenken 12, 14 und 15 um einen Winkel von 120° möglich, so daß ständig Druckwasser dem Schneidkopf 8 zugeführt werden kann. Die Saugpumpe 10 erzeugt in der Saugleitung 19 ein Vakuum und saugt Abrasivmittel aus einem der Vorratsbehälter 3 in den Zwischenbehälter 9, der durch eine nicht dargestellte Füllstandsreglung die Arbeit der Saugpumpe reguliert.

### Aufstellung der verwendeten Bezugszeichen

- 1.: Schneidanlage
- 2.: Versorgungsteil
- 3.: Vorratsbehälter
- 4.: Arbeitstisch
- 5.: Maschinenportal
- 6.: Schiene
- 7.: Schlitten
- 8.: Schneidkopf
- 9.: Zwischenbehälter
- 10.: Saugpumpe
- 11.: Schlauchleitung
- 12.: Gelenk
- 13.: Koppelarm
- 14.: Gelenk
- 15.: Gelenk
- 16.: Druckrohrleitung
- 17.: Rohrstück
- 18.: Schlitzführung
- 19.: Saugleitung
- 20.: Kugelführung
- 21.: Nut
- 22.: Kugel
- 23.: Zahnstange
- 24.: Zahnrad
- 25.: Zahnstangensegment
- 26: Zahnstange
- 27.: Zahnrad
- 28.: Walze
- 29.: Fuge
- 30.: Nase
- 31.: Schutzmantel
- 32.: Wasserstrahlschneiddüse
- 33.: Gehäuse
- 34.: Zentralbohrung
- 35.: Ausnehmung
- 36.: Halterohr
- 37.: Seitenbohrung
- 38.: Schlauchansatz
- 39.: Bund
- 40.: Verteilerkörper
- 41.: Rippen
- 42.: Mittelloch
- 43.: Ringspalt
- 44.: Schlitz
- 45.: Sensor
- 46.: Arm
- 47.: Schneidgut
- 48.: Wasserwand

## Patentansprüche

1. Flüssigkeits- und Abrasivmittelzuführung für eine Fluidstrahlschneidanlage (1) mit einem auf einem Maschinenportal (5) laufenden und einen Schneidkopf (8) tragenden Schlitten (7), mit einem am Schneidkopf (8) befestigten Zwischenbehälter (9) für Abrasivmittel, mit einem ortsfesten Versorgungsteil (2) der Schneidanlage (1), in dem sich eine Hochdruckfluid liefernde Hochdruckpumpe befindet, und mit einer vom Versorgungsteil (2) zum Schneidkopf (8) führenden Druckrohrleitung (16), dadurch gekennzeichnet, daß sich im Versorgungsteil ein Vorratsbehälter (3) für Abrasivmittel befindet, daß ein gelenkiger, zweiteiliger Koppelarm (13) vorgesehen ist, der in der Nähe des Vorratsbehälters (3) am Versorgungsteil (2) sowie am Schlitten (7), von diesem bewegbar, gelenkig gelagert ist und den Schlitten (7) mit dem Versorgungsteil (2) verbindet, daß der Koppelarm (13) eine in seinem Innern geführte flexible, um die Gelenke (12, 12, 15) herum geführte, die Vorratsbehälter (3) über den Zwischenbehälter (9) mit einer durch eine Füllstandsregelung regulierten Saugpumpe (10) verbindende Saugleitung (19) und eine neben der Saugleitung (19) liegende Schlauchleitung, die zum Schlauchansatz (38) an einem vom Schneidkopf getragenem, eine Vorrichtung zur Erzeugung einer Wasserwand (48) rings um den Schneidstrahl bergenden Gehäuse (33) führt, aufweist, und daß sich auf dem Koppelarm (13) die mit spiralig gewundenen Rohrstücken (17) über die Gelenke (12, 14, 15) des Koppelarms (13) geführte Druckrohrleitung (16) befindet, wobei das über dem Gelenk (15) am Maschinenportal (5) befindliche Rohrstück (17) am Schneidkopf (8) befestigt und mit diesem vertikal bewegbar und die Rohrleitung (16) dort in einer vom Koppelarm (13) getragenen Schlitzführung (18) geführt vom Koppelarm (13) abhebbar ist, und daß das noch weitere Versorgungsleitungen für den Schneidkopf (8) tragende Maschinenportal (5) neben dem Arbeitstisch (4) auf einer Seite mit einer Kugelführung (20) in einer Schiene (6) geführt und auf der anderen Seite auf der Rückseite einer aus Zahnstangenelementen (25) aufgebauten Zahnstange (23), deren Fugen (29) überbrückt sind, beweglich gelagert ist.

## Claims

1. Fluid- and abrasive material feed for a jet-cutting apparatus (1) with a carriage (7) running on a machine portal (5) and bearing a cutting head (8), with an intermediate storage container (5) for abrasive material attached to the cutting head (8), with a stationary supply component (2) for the cutting apparatus (1) housing a high-pressure pump supplying high-pressure fluid, and with a pressure line (16) running from the supply component (2) to the cutting head (8), marked by a storage container (3) for abrasive material in the supply component (2), that a jointed, two-part connecting arm (13) is considered, which is mounted in a flexible bearing close to the storage container (3) on the supply component (2) as well as on the carriage (7) by which it can be moved and connecting the carriage (7) with the supply component (2), that the connecting arm (13) is provided with an internal flexible suction line (19) leading around the joints (12, 14, 15), connecting the storage container (3) via intermediate storage container (9) with a level controlled suction pump (10), and a hose pipe next to the suction line (19), that leads to the hose connection (38) of a casing mounted on the cutting head (8) and containing a device for the generation of a water wall (48) around the jet-cutter, and that the pressure line (16) led around the joints (12, 14, 15) of the connecting arm (13) by spirally wound tube sections (17) is placed on the connecting arm (13), while the pipe section (17) on the machine portal (5) above the joint (15) is attached to the cutting head (8), with which it can be moved vertically and where the line (16) guided by a slot guiding device (18) on the connecting arm (13), can be detached from the connecting arm (13), and that the machine portal (5) carrying additional supply lines for the cutting head (8) is mounted in a movable bearing next to the work bench (4), on one side guided by a ball bearing guide (20) in a track (6) and on the other side on the back of a toothed rack (23), constructed by toothed rack elements (25) with bridged gaps (29).

## Revendications

1. Alimentation en liquide et en matière abrasive pour un dispositif de coupe à jet fluide (1) avec un chariot (7) qui se déplace sur un socle de machine (5) et qui porte une tête de coupe (8), possédant un réservoir intermédiaire (9) pour matière abrasive attaché à la tête de coupe (8), une unité d'alimentation fixe (2) pour le dispositif de coupe (1), dans lequel se trouve une pompe à haute pression qui fournit un fluide à haute pression, et une conduite à haute pression (16) entre le dispositif d'alimentation (2) à la tête de coupe (8); caractérisé en ce que un réservoir pour matière abrasive (3) se trouve dans l'unité d'alimentation; en ce que un bras d'accouplement articulé composé de deux pièces (13) est disponible, celui-ci étant attaché à l'unité d'alimentation (2) et au chariot (7) de façon mobile et pouvant être bougé par ce dernier, et qui relie le chariot (7) à l'unité d'alimentation (2); et en ce que le bras d'accouplement (13) possède une conduite d'aspiration (19) flexible qui passe par son intérieur et autour des articulations (12, 14 15) et qui relie le réservoir, en passant par le réservoir intermédiaire (9), à une pompe d'aspiration (10) qui est régulée par un dispositif de contrôle de niveau et qui possède également un tuyau qui se trouve à côté de la conduite d'aspiration (19) avec un boîtier (33) qui est porté au bout du tuyau (38) par la tête de coupe (8) et qui cache un dispositif pour la formation d'une paroi d'eau (48) autour du jet utilisé pour la coupe; et en ce que sur le bras d'accouplement (13) se trouve une conduite à haute pression (16) avec des éléments en spirale (17) qui passe par les articulations (12, 14 , 15) du bras d'accouplement (13), l'élément de la conduite (17) qui se trouve sur l'articulation (15) et auprès du socle de la machine (5) étant attaché à la tête de coupe (8) et pouvant être bougé verticalement avec celle-ci et que la conduite (16) qui passe par un guide à rainure (18) qui est porté à cet endroit par le bras d'accouplement (13) pouvant être soulevé par le bras d'accouplement (13); et en ce que le socle de la machine (5) qui porte encore d'autres conduites d'alimentation pour la tête de coupe (8) est guidé sur un côté par un guide à billes (20) dans un rail (6) et sur le côté opposé et à l'arrière est attaché de manière mobile à une barre dentée (23), qui est constituée de plusieurs éléments de barre (25), dont les joints (29) sont pontés.
